# EUROPÄISCHE PATENTANMELDUNG

(11) **EP 1 062 996 A1**
(43) Veröffentlichungstag der Anmeldung: **27.12.2000**
(21) Anmeldenummer: 00810517.3
(22) Anmeldetag: 15.06.2000
(51) Int. Cl.: B01D 21/02, B01D 21/24, B01D 21/26, B01D 21/28

(54) **Vorklärbecken**

(30) Priorität: 25.06.1999 CH 118599
(71) Anmelder: Oekag Wassertechnik (Schweiz) AG, 6005 Luzern (CH)
(72) Erfinder: Moos, Heinz, 76189 Karlsruhe (DE); Morandini, Giorgio, Luzern 6005 (CH)
(74) Vertreter: Gachnang, Hans Rudolf

(57) **Zusammenfassung**

Das Vorklärbecken (1) umfasst ein zylindrisches Rohr (3), in dem konzentrisch eine zylindrische Absetzwand (17) eingesetzt ist, welche die innere Begrenzung eines kreisringförmigen Absetzraums (13) bildet. Letzterer ist durch eine konisch zusammenlaufende Rutschfläche (25) unten begrenzt. Das Zulaufrohr (9) mündet tangential in den Absetzraum (13); das Auslaufrohr (37) entnimmt das vorgereinigte Wasser vorzugsweise einem Auslaufkasten (35), der am Ende der Zirkulation im Absetzraum (13) eingesetzt ist. Der Zu- und Auslaufbereich ist durch eine einzige Kontrollöffnung (7) einsehbar. Durch letztere kann auch der Faulraum von sedimentierten Schmutzteilen befreit werden.

## Beschreibung

Gegenstand der Erfindung ist ein Vorklärbecken gemäss Oberbegriff des Patentanspruchs 1.

Vorklärbecken oder Klärgruben-Rückhaltung der im häuslichen Abwasser vorhandenen Feststoffe sind bekannt und haben sich bewährt. Sie sind auch unter dem Begriff "Anaerobeverfahren-Klärgruben" oder "Emschergruben", "Imhoffgrube" etc. bekannt. Deren Dimensionierungsrichtwerte sind in der VSA-Richtlinie "Kläranlagen 1995", Artikel 6.3, Seite 16, Ausgabe 1995, zusammengefasst.

Diese bekannten Klärgruben sind funktionstüchtig, doch haben sie ein sehr begrenztes Abscheidevermögen. Schlammpartikel verstopfen oft die diesen Anlagen nachgeschalteten biologischen Stufen oder Teile davon und beeintrachtigen den Wirkungsgrad der gesamten Anlage oder sie führen zu Verstopfung der Filtersubstrate. Bei unregelmässigem Wasseranfall - was bei Kleinkläranlagen die Regel ist - werden aufgrund des raschen und schwankenden Durchlaufs durch den Absatzraum schwimmende Schmutzstoffe mitgeschleppt. Das Mitschleppen von Schmutzstoffen erfolgt insbesondere, weil bei den bekannten Klärgruben mit diagonal verlaufendem Durchfluss der Schachtdurchmesser im wesentlichen die Verweilzeit bestimmt. Im weiteren wird die ohnehin durch den Durchmesser bestimmte knappe Schwimmschlamm-Oberfläche zerschnitten und bei kleineren Anlagen wird dadurch die Schlammentnahme und der Einblick in den Faulraum beeinträchtigt. Bei grösseren Anlagen müssen aus diesem Grunde mehrere Kontrollöffnungen in der Schachtabdeckplatte vorgesehen sein. Diese Schachtöffnungen sind teuer und können Beschädigungen an der Anlage verursachen. Deckelbruch, Wassereinbruch, Geruchsbelästigungen bei Undichtigkeit usw. Verklemmte Deckel führen zu einem grösseren Zeitaufwand bei der Wartung und Kontrolle.

Um den durch den Durchmesser des meist im Querschnitt runden Klärbeckens bestimmten Fliessweg im Absetzraum zu vergrössern, ist es aus der deutschen Patentschrift 248248 bekannt, das zufliessende Wasser radial dem Brunnen zuzuleiten und je hälftig entlang der Brunnenwand zu führen und im Zentrum abzuziehen. In einer weiteren Ausgestaltung der bekannten Ausführung wird das zufliessende Schmutzwasser im Zentrum zugeführt, danach radial nach aussen geleitet und an einer Stelle wieder abgeführt. In beiden Varianten können die Schwebe- und Schmutzstoffe zwischen der Behälteraussenwand und einer konzentrisch angeordneten, in die Wasseroberfläche eintauchenden Tauchwand zum Boden der Grube absinken und dort sedimentieren.

In einer weiteren bekannten Anlage, welche in der DE-A1 4339598 offenbart ist, wird das verschmutzte Wasser radial in einen zylindrischen Brunnen eingeleitet. Eine im Brunnen konzentrisch eingesetzte kegelstumpfförmige Tauchwand teilt den Brunnen in einen Ringraum auf, in welchem das eintretende Wasser beim Eintritt zweigeteilt und entlang den beiden halbkreisringförmigen Räumen zur gegenüberliegenden Seite, wo sich der Auslauf befindet, geführt wird. Zwischen der Beckenwand und der Unterkante der Tauchwand sind schlitzförmige Öffnungen ausgebildet, durch die sedimentierte Schmutzstoffe absinken und in den Faulraum gelangen können.

In beiden bekannten Anlagen wird die Sedimentierstrecke und damit die Verweildauer des zufliessenden verschmutzten Wassers gegenüber den Anlagen mit diagonaler Wasserführung um ca. 50% erhöht. Diese Erhöhung der Verweildauer verbessert den Wirkungsgrad entsprechend. Auch diese Anlagen benötigen mindestens zwei Kontrollöffnungen, nämlich einlauf- und auslaufseitig. Zusätzlich ist eine Öffnung im Zentrum für die Schlammentnahme notwendig.

Der vorliegenden Erfindung liegt die Aufgabe zugrunde, ein Vorklärbecken zu schaffen, das auf gleicher Grundfläche wie die bisherigen Becken eine wesentlich längere Fliessstrecke und damit eine grössere Verweilzeit und einen besseren Energieabbau der Wasserströmung des verschmutzten Wassers im Absetzraum ermöglicht.

Gelöst wird diese Aufgabe durch ein Vorklärbecken gemäss den Merkmalen des Patentanspruchs 1.

Es gelingt, durch die tangentiale Einleitung des Schmutzwassers in den kreisringförmigen Absetzraum, der den gesamten Umfang des Vorklärbeckens umfasst, die Fliessstrecke gegenüber der diagonalen Wasserführung auf das mehr als Dreifache zu verlängern. Durch den optimierten Fliessenergieabbau durch die Zyklonrotation wird die Schleppwirkung minimiert. Im Ringraum angebrachte Tauch- und/oder Lenkwände erhöhen die Schlammsedimentation. Durch die Führung des verschmutzen Wassers in einem kreisbogenförmigen Verlauf werden durch die Fliehkräfte die zu sedimentierenden Stoffe nach aussen abgedrängt und sinken entlang der Beckenwand in den Schlammraum hin ab. Eine unterhalb des ringförmigen Raums ausgebildete, konische Rutschfläche verhindert, dass Partikel, welche sich im Schlammraum befinden, erneut in den Wasserstrom des Absetzraums gelangen können. Die sedimentierten Stoffe am Grund des ringförmigen Absetzraums gleiten durch einen im Verhältnis zur Breite des Absetzraumes schmalen Spalt in den Faulraum. Dadurch wird eine Aufwirbelung der im Faulraum befindlichen Feststoffe verhindert und sie können dort am Boden sedimentieren und faulen. Die Tauch- und/oder Lenkwände im kreisringförmigen Absetzraum können, in Fliess- bzw. Rotationsrichtung gesehen, mit Öffnungen versehen sein, welche den Wasserdurchtritt auf unterschiedlichen Höhen behindert bzw. ermöglicht. Damit wird erreicht, dass die sich während der Zirkulation sukzessive absetzenden Verunreinigungen möglichst vollumfänglich in den Faulraum zu führen und am Ende der Fliessstrecke von Verunreinigungen befreites Wasser abzuführen. Letzteres wird vorzugsweise in einem Auslaufkasten mit einer Zackenkante gesammelt und von dort wiederum tangential aus dem Vorklärbecken abgeführt. Um eine möglichst lange Verweilstrecke zu erhalten, liegt der Auslaufkasten unmittelbar vor der Eintrittsöffnung bzw. unter dem Rohrende der Zulaufleitung. Ein einziger Kontrolldeckel über dem Auslaufkasten ermöglicht es, sowohl den Auslauf als auch den Zulauf zu beaufsichtigen und zudem von dort die Entleerung des Schlammsammlers vorzunehmen.

In einer weiteren vorteilhaften Ausgestaltung der Erfindung wird der kreisringförmige Absetzraum durch ein zentrales Rohr gebildet, an dessen unterem Ende die konische Rutschfläche anschliesst und das zugleich zum Abführen der aus dem Faulraum aufsteigenden Gase dienen kann. Bei dieser Ausgestaltung ist es besonders vorteilhaft, das zulaufende Wasser oberhalb der kegelförmigen Rutschfläche zuzuführen und den Ablauf nahe der Wasseroberfläche, d.h. am oberen Ende des Beckens anzuordnen. Dies ermöglicht eine Wasserrotation von unten nach oben und damit eine optimale Sedimentation durch den Energieabbau. Im weiteren ist die mit dem zentralen Rohr bzw. der zentralen Wandung des ringförmigen Kanals verbundene Rutschfläche äusserst kostengünstig herstellbar und kann für die Wartung des Vorklärbeckens aus diesem herausgehoben werden.

Das erfindungsgemässe Vorklärbecken kann aus einem handelsüblichen Beton-, Kunststoff- oder Metallrohr hergestellt werden, in welches die zentrale konzentrische Absetzwand und die konisch verlaufende Rutschfläche eingesetzt werden. Die Möglichkeit der Verwendung handelsüblicher Betonrohre erlaubt es, diese schweren Teile in der Nähe des Einsatzortes zu beschaffen. Es müssen nur die weniger voluminösen und auch leicht transportierbaren Wasserführungselemente zugeführt werden.

Anhand eines illustrierten Ausführungsbeispiels wird die Erfindung näher erläutert. Es zeigen:
- Figur 1: eine Aufsicht auf ein Vorklärbecken,
- Figur 2: einen Vertikalschnitt durch das Vorklärbecken, längs Linie II-II in Figur 1,
- Figur 3: eine schematische Darstellung des Fliesswegs des verschmutzten Wassers,
- Figur 4: eine perspektivische Darstellung des Auslaufkastens,
- Figur 5: einen Grundriss der konzentrischen Absetzwände in zusammengefügtem Zustand,
- Figur 6: einen Grundriss der konzentrischen Absetzwände in zerlegtem Zustand für den Transport,
- Figuren 7-9: drei verschiedene Tauch- und Trennwände,
- Figur 10: eine schematische Darstellung der Befestigung der Absetzwände an der Beckenwand,
- Figur 11: einen Vertikalschnitt durch eine weitere Ausführungsform des Vorklärbeckens längs Linie XI-XI in Figur 12 und
- Figur 12: eine Aufsicht auf das Vorklärbecken in Figur 11,
- Figur 13: einen Vertikalschnitt durch eine weitere Ausführungsform des Vorklärbeckens.

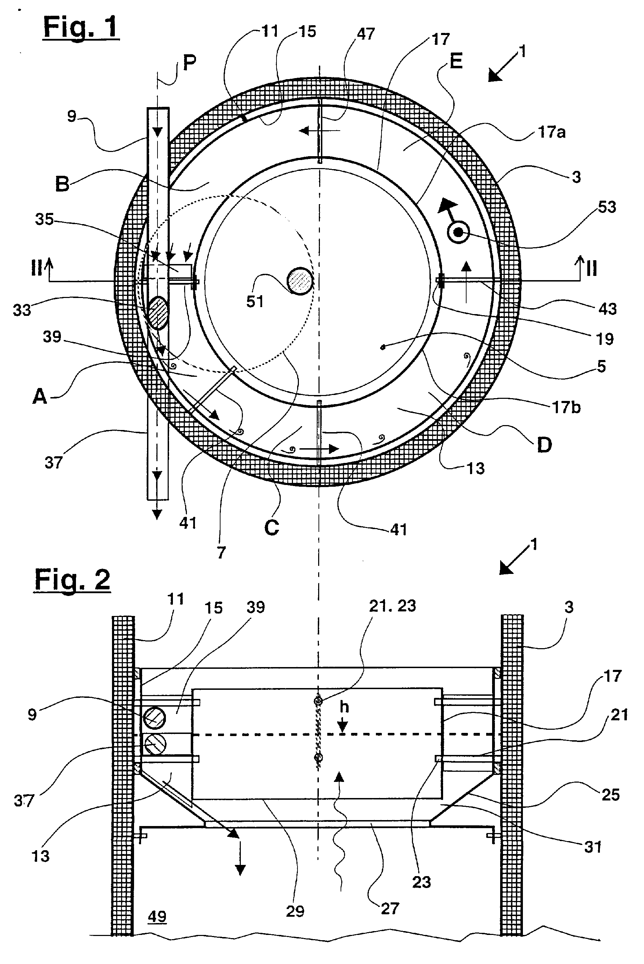

Das erfindungsgemässe Vorklärbecken 1 umfasst ein vorzugsweise zylindrisches Rohr 3, einen unten das Rohr 3 verschliessenden Boden 5 (in Figur 2 nicht sichtbar) sowie einen nicht näher dargestellten Deckel mit einer in Figur 1 in punktierter Linie angedeuteten Kontrollöffnung 7. Ein Zulaufrohr 9 für das Schmutzwasser durchdringt den Mantel des zylindrischen Rohrs 3 und endet an oder in einem Abstand von der Innenwand 11 tangential in einem kreisringförmigen Absetzraum 13. Letzterer wird seitlich begrenzt einerseits durch die Innenwand 11 des Rohrs 3 oder eine auf der Innenwand 11 aufgesetzte die Betonkorrosion verhindernde Schutzwand 15 aus Kunststoff oder Metall oder durch einen entsprechenden Anstrich und anderseits im Zentrum durch eine konzentrisch zum Rohr 3 in diesem eingesetzte rohrförmige Absetzwand 17. Die Absetzwand 17 kann einteilig als zylindrisches Rohrstück ausgebildet sein oder aus zwei Halbrohrschalen 17a, 17b zusammengesetzt und durch Verbindungsmittel 19 zusammengehalten werden. Die Absetzwand 17 ist im ersten Ausführungsbeispiel (Fig. 1 - 10) durch radial angeordnete Hülsen 21, durch welche Verbindungsmittel, wie Dübel oder Schrauben 23, geführt werden, mit der Wand 3 und/oder der Schutzwand 15 verbunden. An der Unterkante der Schutzwand 15 und/oder an der Wand 3 ist eine kegelstumpfmantelförmige Rutschfläche 25 befestigt. Der Durchmesser der tiefer liegenden öffnung 27 der Rutschfläche 25 ist vorzugsweise kleiner als der Durchmesser der Absetzwand 17. Zwischen der Unterkante 29 der Absetzwand 17 und der Kegelmantelfläche der Rutschfläche 25 ist ein ringförmiger Spalt 31 ausgebildet, dessen Breite durch die Durchsatzmenge, für die das Vorklärbecken ausgestaltet ist, bestimmt wird.

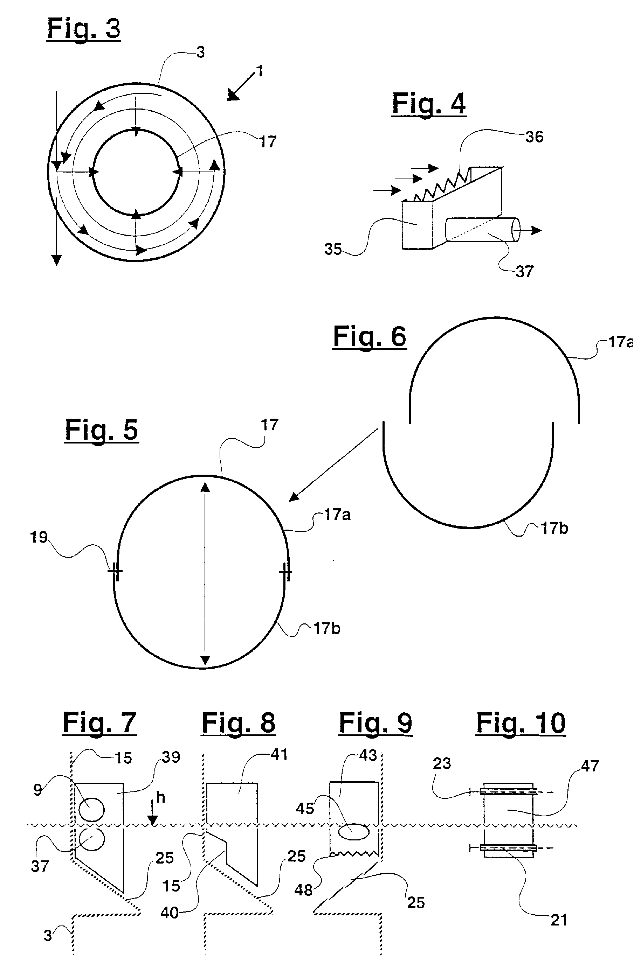

Im ringförmigen Absetzraum 13 kann unterhalb der Mündung bzw. der Ausflussöffnung 33 des Zulaufrohrs 9 zusätzlich ein Auslaufkasten 35 mit Zackenüberlauf 36 eingesetzt sein (siehe Figuren 1 und 4). Aus dem bodennahen Bereich des Auslaufkastens 35 führt ein Ab- bzw. Auslaufrohr 37 tangential durch die Wand des Rohres 3 nach aussen. Alternativ könnte das Auslaufrohr 37 das Vorklärbecken 1 auch radial durchdringen (keine Darstellung).

Über den Umfang können in regelmässigen oder unregelmässigen Abständen verteilt Tauch- und Lenkwände radial verlaufend in den Absetzraum 13 eingesetzt sein. Eine Trennwand 39 (vergleiche auch Figur 7) wird vom Zulaufrohr 9 und vom Auslaufrohr 37 durchdrungen und trennt einen Vorfangraum A am Beginn der Fliessstrecke vom Auslaufraum B am Ende der Fliessstrecke. Eine oder mehrere Tauchwände 41 (vgl. auch Figur 8) sind in den Vorfangraum C eingesetzt. Die mindestens eine mit einer abgestuften Unterkante 40 versehene Tauchwand 41 zwingt das zirkulierende Schmutzwasser an die Aussenwand, d.h. an die Schutzwand 15 und in den Bereich der Rutschfläche 25. Selbstverständlich kann die Unterkante 40 der Tauchwand 41 auch einen von der in Figur 8 abgebildeten unterschiedlich geeigneten Verlauf aufweisen. Die Zirkulation wird dadurch verlangsamt und die Schmutzteile durch die Zentrifugalkräfte nach aussen und anschliessend durch die Schwerkraft nach unten geführt. Im anschliessenden Absetzbereich D kann eine weitere Tauchwand 43 eingesetzt sein (vgl. auch Figur 9), die im unteren Bereich einen grösseren Durchtrittsquerschnitt für das zirkulierende Wasser freilässt und zudem im Bereich der Wasseroberfläche h eine Durchtrittsöffnung 45 für im wesentlichen von Schmutzteilen befreites Wasser aufweist. Eine ähnlich ausgebildete Tauchwand 47 (vgl. auch Figur 10) kann den Absetzbereich D vom Auslaufraum B trennen. An deren Unterkante angebrachte Zacken 48 begünstigen die Strömungsverteilung.

Die Tauchwände 41, 43 und 47 sowie die Trennwand 39 können an den Hülsen 21 befestigt sein.

Für die Entnahme des sedimentierten Schlamms aus dem Faulraum 49 kann innerhalb der rohrförmigen Absetzwand 17 ein Saugrohr 51 eingesetzt sein (in Figur 2 der besseren Übersichtlichkeit halber nicht dargestellt). Im Bereich E des ringförmigen Absetzraumes 13 können zudem ein oder mehrere Belüftungsvorrichtungen 53 zur Belüftung des Absetzraums angeordnet sein.

Im folgenden wird die Funktionsweise der ersten Ausführungsform des Vorklärbeckens 1 näher erläutert: In Richtung des Pfeils P tritt verschmutztes Wasser durch das Zulaufrohr 9 tangential in den ringförmigen Absetzraum 13 ein und beginnt den kreisförmigen Absetzraum zu durchlaufen. Durch Reibung an der Schutzwand 15, welche den Absetzraum 13 aussen begrenzt, wird eine laminare Strömung verhindert und das Wasser während der Zirkulation verwirbelt. Schmutzteile werden durch die Zentrifugalkräfte nach aussen gedrängt und durch die Schwerkraft nach unten geführt. Sie gelangen jeweils gebremst durch die Tauch- und Lenkwände 41, 43 und 47 auf die Rutschfläche 25 und verlassen den Absetzraum 13 durch den Schlitz 31 zwischen der Absetzwand 17 und der Rutschfläche 25. Sie lagern sich danach im Faulraum 49 ab und können periodisch oder kontinuierlich über das Saugrohr 51 oder eine Schlammpumpe, die von der Kontrollöffnung 7 zugänglich sind, abgesaugt werden. Durch die Kontrollöffnung 7 kann jederzeit der wichtige Einlauf- und Auslaufbereich der Rohre 9 und 37 sowie der Auslaufkasten 35 eingesehen werden.

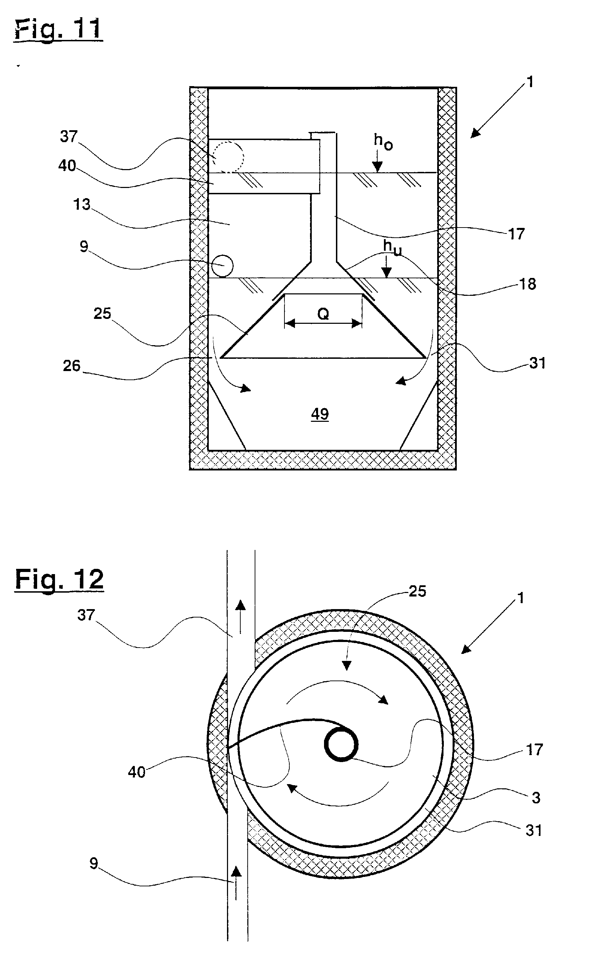

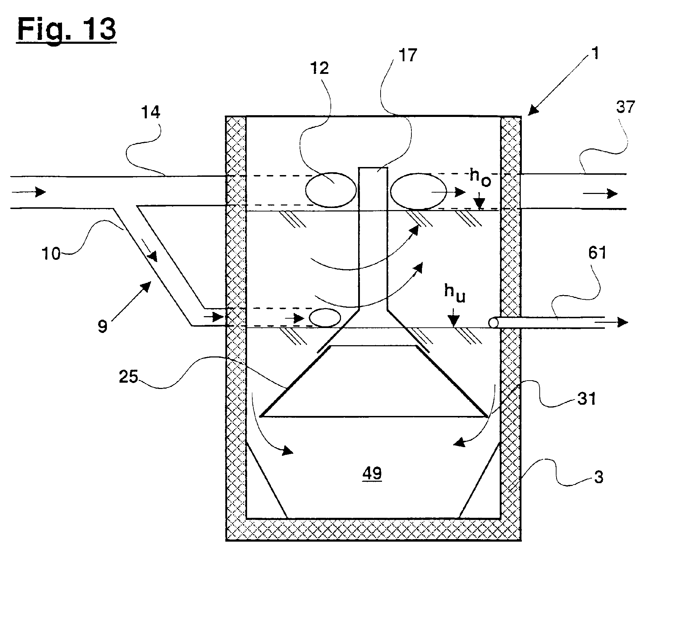

In der zweiten Ausgestaltung der Erfindung gemäss den Figuren 11 bis 13 kann der ringförmige Absetzraum 13 eine grössere radiale Ausdehnung aufweisen und entsprechend die rohrförmige Absetzwand 17 einen kleineren Durchmesser haben. Die Rutschfläche 25 ist hier ebenfalls kegelstumpfförmig. Der kleinere Durchmesser des Kegelstumpfs liegt - im Gegensatz zur ersten Ausführungsform - oben und schliesst unten an die rohrförmige Absetzwand 17 an. Die rohrförmige Absetzwand 17 weist folglich an ihrem unteren Ende eine nach unten gerichtete trichterförmige Erweiterung auf. Die periphere Kante 26 der Rutschfläche 25 liegt in geringem Abstand, z.B. wenige Zentimeter, entfernt von der Innenfläche des das Vorklärbecken 1 bildenden zylindrischen Rohres 3. Der dort gebildete kreisringförmige Raum entspricht dem Schlitz 31 im ersten Ausführungsbeispiel. Die Rutschfläche kann, wie in den Figuren 11 und 13 dargestellt, aus zwei sich überlappenden Kegelstumpfmänteln 18 und 25 oder aus einem einzigen, vom unteren Rohrende wegführenden Kegelstumpfmantel 25 aufgebaut sein. Die zweiteilige Variante hat den Vorteil, dass zur Reinigung des Faulraums 49 die Absetzwand 17 mit dem kleineren Kegelstumpfmantel 18 nach oben abgehoben und eine Kontroll- oder Mannöffnung mit Durchmesser Q freigelegt werden kann.

Das das Wasser zuführende Zulaufrohr 9 ist in dieser Ausgestaltung der Erfindung im unteren Drittel des Absetzraums 13 angeordnet; das Auslaufrohr 37 liegt am oberen Ende des zylindrischen Rohres 3, d.h. im Bereich des Wasserspiegels h₀. Je nach Durchmesser des Rohres 3 kann die Höhendifferenz zwischen Ein- und Auslauf 1-1,5 m betragen.

Analog zum ersten Ausführungsbeispiel kann im ringförmigen Absetzraum 13 auf der Höhe der Wasseroberfläche eine Tauchwand 40 eingesetzt sein, die sich beispielsweise spiralförmig von der Absetzwand 17 zum zylindrischen Rohr 3 erstreckt (vergl. Fig.12).

Im folgenden wird die Funktionsweise der zweiten Ausführungsform des Vorklärbeckens näher erläutert: Die Zufuhr von verschmutztem Wasser erfolgt durch das Rohr 9, das in einem Abstand von beispielsweise 1 bis 1,2 m unterhalb des Ablaufrohres 37 liegt. Das zufliessende Wasser bewirkt eine Zirkulation oberhalb der Rutschfläche 25, so dass die Sedimente radial nach aussen gefördert werden und entlang der Wand des Rohres 3 nach unten gleiten. Sie verlassen den Absetzraum 13 durch den peripheren Schlitz 31 und können im dort beruhigten Schlammraum 49 sedimentieren. Die anfänglich starke Zirkulation am Zufluss verhindert das Ablagern von Feststoffen auf der Rutschfläche 25 (Selbstreinigung). Die Entleerung des Schlamm- oder Faulraums 49 erfolgt durch die rohrförmige Absetzwand 17, durch welche auch die im Faulraum 49 entstehenden Faulgase abgeführt werden können. Dies hat den Vorteil, dass keine Faulgase durch den Absetzraum 13 hindurch nach oben aufsteigen und so die Sedimentation und die Wasserqualität beeinträchtigen können.

In Figur 13 ist das Ende des Zulaufrohrs 9 als Sturzrohr 10 ausgebildet. Das heisst, der letzte Abschnitt des Zulaufrohrs 9 vor der Einmündung in das Becken ist stark zur Horizontalen geneigt angeordnet und weist einen kleineren Durchmesser als das Ablaufrohr 37 auf. Die Einmündung des Sturzrohrs 10 liegt auf dem Niveau hᵤ. Durch diese Massnahme kann eine höhere Fliessgeschwindigkeit des Wassers beim Einritt in den Ringraum 13 erreicht werden. Die Zulaufleitung 9 vor dem Sturzrohr 10 und die Ablaufleitung 37 liegen im wesentlichen auf gleichem Niveau und lassen sich nach Entfernung des Deckels 12 am Ende des Rohrstummels 14 bei Bedarf leicht entstopfen.

In Figur 13 ist weiter ein Feinauslauf 61 ausgebildet, der auf dem Niveau hᵤ liegt und dazu dient, bei sehr kleinem Wasserzulauf oder das mengenmässig kleine Vorlaufvolumen, welche meist einen hohen Verschmutzungsgrad aufweisen, direkt einer Reinigungsanlage zuzuführen. Gleichzeitig kann durch den Feinauslauf 61 nach Abschluss des Regenereignisses der Inhalt des Beckens 1 auf das Niveau hᵤ abgesenkt werden.

Das erfindungsgemässe Vorklärbecken 1 kann zur Vorklärung auch in Grossanlagen eingesetzt werden. Es lässt sich durch das Vorschalten eines erfindungsgemässen Vorklärbeckens 1 erreichen, dass bei Regenereignissen durch die grosse hydraulische Belastung eine Durchspülung der Absetzbecken verhindert wird, weil durch die vorangehende sehr wirksame Schlammabscheidung die Zulaufmenge zu den Absetzbecken klein gehalten werden kann.

## Patentansprüche

1. Vorklärbecken (1) mit rundem Querschnitt und mit einer darin konzentrisch eingesetzten, als Tauchwand fungierenden rohrförmigen Absetzwand (17) und mit einer konischen Rutschfläche (18,25), sowie einem unter der Rutschfläche (25) liegenden Schlammfaulraum (49), welcher durch einen Schlitz (31) mit einem oberhalb der Rutschfläche (25) liegenden Absetzraum (13) verbunden ist und mit einem in den Absetzraum (13) einmündenden Zulaufrohr (9) und einem aus dem Absetzraum (13) wegführenden Auslaufrohr (37), dadurch gekennzeichnet, dass das Zulaufrohr (9) tangential zwischen der Wand des Beckens (1) und der Absetzwand (17) einmündet und dass das Auslaufrohr (37) auf unterschiedlicher Höhe (h) zum Zulaufrohr (9) aus dem kreisringförmigen Absetzraum (13) wegführt.

2. Vorklärbecken nach Anspruch 1, dadurch gekennzeichnet, dass die Ausflussöffnung (33) des Zulaufrohrs (9) in Fliessrichtung des Wassers tangential versetzt zur Abflussöffnung im Rohr (3) in das Auslaufrohr (37) liegt.

3. Vorklärbecken nach einem der Ansprüche 1 oder 2, dadurch gekennzeichnet, dass das Zulaufrohr (9) auf der Höhe (hᵤ) der Rutschfläche (18,25) einmündet und das Auslaufrohr (37) im Bereich des höchsten Wasserspiegels (h₀) den Absetzraum (13) verlässt.

4. Vorklärbecken nach einem der Ansprüche 1 bis 3, dadurch gekennzeichnet, dass im kreisringförmigen Absetzraum (13) mindestens eine radial angeordnete, die Zirkulation bremsende Tauch- oder Lenkwand (41,43,47) eingesetzt ist.

5. Vorklärbecken nach Anspruch 4, dadurch gekennzeichnet, dass das Auslaufrohr (37) einlaufseitig in einen im Absetzraum (13) liegenden Auslaufkasten (35) mündet.

6. Vorklärbecken nach einem der Ansprüche 2 bis 5, dadurch gekennzeichnet, dass in der mindestens einen Tauchwand (41,43,47) eine den Querschnitt des Absetzraumes (13) vermindernde Öffnung (45) angebracht ist.

7. Vorklärbecken nach einem der Ansprüche 1 bis 6, dadurch gekennzeichnet, dass zwischen den beiden Enden des Zulaufrohrs (9) und des Auslaufrohrs (37) in den Absetzraum (13) eine den Absetzraum (13) teilende Trennwand (39) eingesetzt ist und/oder dass in Fliessrichtung des Wassers der Auslauf vor dem Zulauf liegt.

8. Vorklärbecken nach einem der Ansprüche 1 bis 7, dadurch gekennzeichnet, dass die Absetzwand (17) durch Hülsen (21) und/oder Schrauben (23) mit der Wand des Rohres (3) verbunden ist.

9. Vorklärbecken nach einem der Ansprüche 1 bis 8, dadurch gekennzeichnet, dass die konische Rutschfläche (25) an deren Peripherie mit dem Mantel des das Vorklärbecken (1) bildenden Rohres (3) verbunden oder dass die Rutschfläche (18,25) an der Unterkante der rohrförmigen Absetzwand (17) befestigt ist.

10. Vorklärbecken nach einem der Ansprüche 1 bis 9, dadurch gekennzeichnet, dass die Rutschfläche zwei sich überlappende Abschnitte (18,25) umfasst, wobei der obere Abschnitt (18) mit der Absetzwand (17) vom unteren Abschnitt (25) abhebbar ist.

11. Vorklärbecken nach einem der Ansprüche 1 bis 10, dadurch gekennzeichnet, dass das Zulaufrohr (9) als Sturzrohr (10) ausgestaltet ist und/oder dass auf der Höhe (hᵤ) ein als Freiauslauf (61) fungierendes Rohr aus dem Absetzraum (13) herausgeführt ist.
